# EUROPEAN PATENT APPLICATION

(11) **EP 4 494 906 A1**
(43) Date of publication of application: **22.01.2025**
(21) Application number: 23185837.4
(22) Date of filing: 17.07.2023
(51) Int. Cl.: B60H 1/32, B60H 1/00

(54) **A METHOD FOR DETERMINING CONDITION DATA INDICATIVE OF A BLOCKAGE OF A THERMAL UNIT OF A HEAT PUMP SYSTEM OF A VEHICLE**

(71) Applicant: Volvo Car Corporation, 405 31 Göteborg (SE)
(72) Inventor: GRAPE, Viktor, 40531 Göteborg (SE); OLSEN, Hans Erik, 40531 Göteborg (SE); FECHNER, Brian, 40531 Göteborg (SE)
(74) Representative: Maiwald GmbH

(57) **Abstract**

The disclosure relates to a method (100) for determining condition data indicative of a blockage of a thermal unit (22) of a heat pump system (20) of a vehicle (1), the heat pump system (20) further comprising an air supply unit (24), the method (100) comprising:
- receiving model data (110) indicative of an air flow through the thermal unit (22) and the air supply unit (24), wherein the model data is based on a model of the heat pump system (20);
- receiving measured data (120) indicative of the air flow through the thermal unit (22) and the air supply unit (24), wherein the measured data is based on one or more measuring means of the air supply unit (24); and
- determining the condition data (130) based at least on the model data and the measured data.

## Description

### TECHNICAL FIELD

The present disclosure relates to a method for determining condition data indicative of a blockage of a thermal unit of a heat pump system of a vehicle, a method for determining a blockage of a thermal unit of a heat pump system of a vehicle, a data processing system comprising means for carrying out the method, a vehicle with a system for providing condition data for a heat and/or cooling unit.

### BACKGROUND ART

The efficiency of known heat pump systems of vehicles inter alia depends on possible blockage of a respective thermal unit of the heat pump system. Specifically, heat pump systems with an at least partially blocked thermal unit have an increased energy demand. The goal of reducing fuel and energy consumption, in particular in electric vehicles, is obstructed with limited energy efficiency of the heat pump systems when they are blocked.

### SUMMARY

In view of the above, it is an object of the present disclosure to improve the energy efficiency of heat pump systems in vehicles.

The problem is at least partially solved or alleviated by the subject matter of the independent claims of the present disclosure, wherein further examples are incorporated in the dependent claims.

According to a first aspect, there is provided a method for determining condition data indicative of a blockage of a thermal unit of a heat pump system of a vehicle, the heat pump system further comprising an air supply unit, the method comprising:
- receiving model data indicative of an air flow through the thermal unit and the air supply unit, wherein the model data is based on a model of the heat pump system;
- receiving measured data indicative of the air flow through the thermal unit and the air supply unit, wherein the measured data is based on one or more measuring means of the air supply unit; and
- determining the condition data based at least on the model data and the measured data.

The method may be at least partly computer-implemented. It may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

The vehicle may be, for example, a motor vehicle such as a passenger car, a vehicle configured for transporting goods such as a truck, an aircraft, or generally any vehicle with a heat pump system.

For example, the heat pump system may be configured to heat and/or cool an passenger compartment of the vehicle. Also, or alternatively, the heat pump system may be configured to maintain the temperature of the passenger compartment at a constant level. Also, or alternatively, the heat pump system may be configured to control a temperature set by a driver of the vehicle and/or a predetermined temperature for the passenger compartment of the vehicle.

The air supply unit may, for example, be configured to convey a gaseous medium, in particular air. The air supply unit may be a fan unit, which may convey or propel the gaseous medium. The air supply unit may be configured to move or propel the gaseous medium in a conveying direction through the thermal unit.

The air flow may be defined by an air pressure and/or a flow velocity. The air flow may be affected or controlled by the air supply unit. The air flow may be dependent on a speed of movement of the vehicle and/or the air supply unit and/or affected or controlled by the speed of movement of the vehicle.

The thermal unit may for example comprise a thermally conductive material in order to emit or absorb thermal radiation. The thermal unit may be configured as a heat sink or radiator, for example.

The model of the heat pump system may for example be configured as a physical model of the heat pump system. The model of the heat pump system may in particular comprise information about the air flow through the heat pump system. The model of the heat pump system may comprise model values representing an air flow through the heat pump system, in order to determine the air flow through the heat pump system, for example.

Furthermore, the model data may, for example, be based on a predefined model of the heat pump system. The model of the heat pump system may be further developed and/or renewed during the period of use of the vehicle. In this context, developed may be understood among other things as indicating that the model values for the air flow may be generated during the period of use of the heat pump system. In this context, renewed may be understood among other things as indicating that the model values for the air flow may be amended during the period of use of the heat pump system.

The model of the heat pump system may at least be configured to determine an inlet air data of the heat pump system in dependence of a movement of the vehicle. Thereby, the supply air data may be configured to characterize, for example, an amount of air flow entering the heat pump system.

The one or more measuring means may comprise, for example, be a measuring means configured to measure an air flow. For example, the measuring means may comprise an airflow meter and/or an anemometer.

The condition data may comprise, for example, information about an air flow entering the heat pump system and on an air flow leaving the heat pump system. The condition data may include air pressure information or flow velocity information of air flow through the thermal unit.

Furthermore, the condition data may comprise an indicator value configured to indicate a blockage of a thermal unit, wherein the indicator may for example be based on a comparison of the air flow entering the heat pump system and the air flow leaving the heat pump system.

Further, the condition data may be configured in order to be read and/or evaluated by the vehicle. The evaluation of the condition data may control the vehicle in order to provide, for example, a hint to a driver of the vehicle regarding the blockage and/or to control the vehicle in such a way that the blockage is removed.

Removing the blockage may result in minimizing the energy efficiency of the vehicle and/or the heat pump system of a vehicle and/or optimizing the energy efficiency of the vehicle and/or the heat pump system of a vehicle.

According to an example, a measurement of the one or more measuring means may be performed in a propelled mode of a fan unit as air supply unit of the heat pump system.

The propelled mode may describe a usage mode of the fan unit in which the fan unit is driven, for example, by a motor means of the fan unit. The fan unit while in the propelled mode may be operated at a defined rotating speed of the fan unit.

For example, in propelled mode it may be possible to determine the air flow by determining, for example, a required or actual power consumption of the motor means when driving the fan unit at a set rotational speed.

According to an example, the measured data may comprise at least information of a rotational speed of the fan unit, wherein the information may consist of one or more of a first partial rotational speed value and a second partial rotational speed value.

For example, in the propelled mode it may be possible to determine the air flow by determining, for example, a deviation of a rotational speed of the fan unit from a set rotational speed of the fan unit by the motor means.

According to an example, a measurement of the one or more measuring means may be performed in a freewheeling mode of a fan unit as air supply unit of the heat pump system.

The freewheeling mode may describe a usage mode of the fan unit in which the fan unit is not driven by the motor means and/or is driven by an air flow through the heat pump system. The fan unit while in the freewheeling mode may rotate at a rotational speed of the fan unit depending of a driving of the vehicle, in particular depending a driving speed of the vehicle.

In other words, a fan unit that is freewheeling during driving of the vehicle will rotate at a certain speed of the vehicle depending on the air flow. Moreover, the air flow may depend on the certain speed of the vehicle, ambient conditions of the vehicle, ambient conditions of the heat pump system and a pressure drop of the heat pump system.

Furthermore, the freewheeling mode of the fan unit may be performed for a defined time period for the rotation speed of the fan unit to settle. Thereby, the defined time period may between 1 and 5 seconds [s], 6 and 10 [s] and/or 11 and 20 [s].

For example, the rotation speed of the fan unit, a speed of the vehicle and/or ambient conditions of the vehicle and/or ambient conditions of the heat pump system may be used to determine an air flow inside of the heat pump system. The condition data may further be based on the determined air flow.

The method may comprise activating the freewheeling mode, for example, by turning off the motor of the fan unit or switching it from an operational mode to an idling mode.

According to an example, the method may be carried out during a driving state, in particular a driving state with a predefined driving speed range, of the vehicle.

The driving state may comprise a state where the vehicle is stationary or driving/traveling.

The driving speed range may be predefined as a driving speed of the vehicle between 1 and 20 kilometer per hour [km/h] or 21 and 50 [km/h], for example. By using the method only in a predefined driving speed range, in particular a low driving speed range, the complexity in determining the condition data may be reduced, because the ambient conditions are less harsh for the heat pump system at low speeds. Therefore, the condition data may be determined with higher accuracy.

According to an example, the condition data may comprise one or more of icing information indicative for a blockage of the thermal unit and clogging information indicative for a blockage of the thermal unit.

The one or more icing information indicative for a blockage and/or clogging information indicative for a blockage may for example be determined by means of the condition data. The one or more icing information indicative for a blockage and/or clogging information indicative for a blockage may be compared to information and/or values of the model data to determine whether the blockage indicates an icing of the thermal unit and/or a clogging of the thermal unit.

Further, if the rotation speed of the fan unit, the speed of the vehicle and ambient conditions of the vehicle are known, it may be possible to calculate the pressure drop that would change if ice builds up or clogging builds up on the thermal unit, in particular located or placed in front of the air supply unit, in particular with respect to the direction of airflow.

According to an example, the method further may comprise providing control data based on at least the condition data for controlling an air regulation means of the heat pump system to unblock the thermal unit.

The air regulation means may be a heating unit of the vehicle configured to heat the heat pump system, for example.

According to an example, the control data may further be configured to control one or more of a de-icing of the heat pump system and to re-perform the method following a de-icing of the heat pump system.

The de-icing may for example be performed by the air regulation means. The heating unit may be configured to de-ice the thermal unit and/or prevent an icing of the thermal unit.

In other words, detecting icing of the thermal unit may allow the system to run more efficiently, since it may be possible to control the air regulation means in colder climates and de-ice the heat pump system in an optimal way to utilize its full potential while usage.

In an example, the model data may comprise at least one target value for the measured data. The at least one target value may also be a target value range. The at least one target value or the target value range may be indicative of an unblocked thermal unit or, in other words, that no blockage of the thermal unit is present. The at least one target value may be dependent on vehicle parameters, e.g., driving speed, and/or ambient conditions, for example.

In an example, the determining of the condition data may be at least based on a comparison of the measured data with the model data. Accordingly, the at least one target value or target value range, for the current driving speed and/or ambient conditions, may be chosen from the model data and compared to the measured data. The measured data may contain at least one measured value, e.g., an RPM value and/or a power consumption value, of the air supply unit. If the at least one measured value corresponds to the at least one target value or falls within the target value range, it may be determined as condition data, that the thermal unit is free of a blockage. However, if the at least one measured value does not correspond to the at least one target value or falls outside the target value range, it may be determined as condition data, that the thermal unit is blocked.

In a simple yet effective embodiment, the model data may be configured as an assignment, e.g., in the form of a table and/or function, of at least one target value or a target value range to a condition of an unblocked thermal unit and/or a blocked thermal unit depending on at least one parameter, e.g., a driving parameter, such as driving speed, and/or an ambient condition parameter, e.g., ambient temperature and/or pressure. Accordingly, based on the at least one parameter, e.g., a current driving speed and ambient temperature, at least one target value or a target value range may be determined from the model data for comparison with the measured data, from which it is known, based on the assignment, that the thermal unit is not blocked. This knowledge may be based on previous experiments or simulations, for example. Now, if the measured data deviates from the at least one target value or target value range, it may be judged that a blockage of the thermal unit is present. Based on the degree of deviation, it may be judged to what degree the thermal unit is blocked, e.g., by ice.

According to an example, the model of the heat pump system may at least be modeled based on input data of a machine learning algorithm.

The model of the heat pump system may be generated or further developed on the input of the machine learning algorithm. For example, values of the model of the heat pump system may be generated or determined using the machine learning algorithm, which comprise characteristics such as an air flow rate through the heat pump system. For example, values of the model of the heat pump system may be further developed or amended using the machine learning algorithm, which comprise characteristics such as an air flow rate through the pump system.

According to an example, the machine learning algorithm may be trained at least by one or more of the measured fan data, the condition data, reference data of the vehicle and usage data of the vehicle.

According to a second aspect, there is provided a method for determining a blockage of a thermal unit of a heat pump system of a vehicle, the heat pump system further comprising an air supply unit, using condition data determined by the method according to any of the preceding claims. The method may be at least partially computer-implemented.

According to a third aspect, there is provided a data processing system comprising means for carrying out the method of the first aspect and/or the second aspect of this disclosure.

According to a fourth aspect, there is provided a vehicle with the data processing system of the third aspect of this disclosure and a heat pump system comprising a thermal unit and an air supply unit.

According to an example, the heat pump system of the disclosed vehicle may comprise sealing means configured to provide at least a sealed connection between the radiator unit and the fan unit.

The sealing means may be configured to prevent or at least reduce leakage of an air of the air flow through the heat pump system. The sealing means may seal at least one connection between the thermal unit and the air supply unit. The sealing means may further seal at least one connection between an inlet of the heat pump system and the thermal unit and/or seal at least one connection between the air supply unit and an outlet of the heat pump system.

In other words, for accurate measurements there may be sufficient sealing between the thermal unit of the heat pump system and the air supply unit of the heat pump system forcing all the air to go through the thermal unit.

According to another aspect, there may be a computer program element comprising instructions which, when the program is executed by a computing device of a computing environment, cause the computing device to carry out the method according to the method of the first aspect or the second aspect of this disclosure.

According to another aspect, there may be a computer-readable medium comprising instructions which, when executed by a computing device, cause the computing device to carry out the method according to the first aspect or the second aspect of this disclosure.

It should be noted that the above examples may be combined with each other irrespective of the aspect involved. Accordingly, the method may be combined with structural features and, likewise, the system and vehicle may be combined with features described above with regard to the method.

These and other aspects of the present disclosure will become apparent from and elucidated with reference to the examples described hereinafter.

### BRIEF DESCRIPTION OF DRAWINGS

In the following, the disclosure is described exemplarily with reference to the enclosed figures, in which:
- Figure 1: shows an example of a diagram of the disclosed method;
- Figure 2: shows a schematic illustration of an overview of an implementation of the data processing system;
- Figure 3: shows a schematic illustration of an example of a part of a heat pump system of a vehicle; and
- Figure 4: shows a schematic illustration of an example of a part of a heat pump system of a vehicle with a partly blocked thermal unit.

Notably, the figures are merely schematic representations and serve only to illustrate examples of the present disclosure. Identical or equivalent elements are in principle provided with the same reference signs.

### DETAILED DESCRIPTION

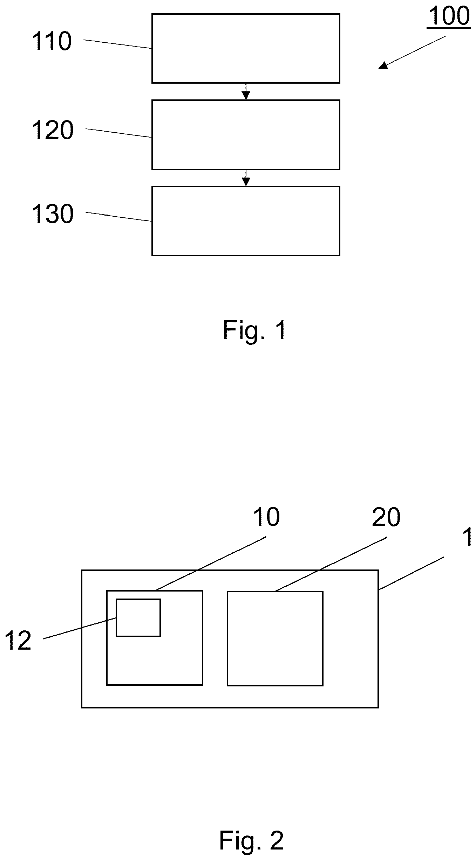

Figure 1 shows an example of a diagram of the disclosed method 100 determining condition data indicative of a blockage of a thermal unit 22 of a heat pump 20 system of a vehicle 1 (see Figs. 2 to 4), the heat pump system 20 further comprising an air supply unit 24, the method 100 comprising: receiving model data 110 indicative of an air flow through the thermal unit 22 and the air supply unit 24, wherein the model data is based on a model of the heat pump system 20; receiving measured data 120 indicative of the air flow through the thermal unit 22 and the air supply unit 24, wherein the measured data is based on one or more measuring means of the air supply unit 24; and determining the condition data 130 based at least on the model data and the measured data.

Figure 2 shows a schematic illustration of an overview of an implementation of the data processing system 10 comprising means for carrying out the disclosed method.

In this example, the data processing system 10 comprises a computer-readable medium 12 and is implemented in a vehicle 1. In addition, the vehicle 1 comprises a heat pump system 20 that is configured to be controlled by the data processing system 10.

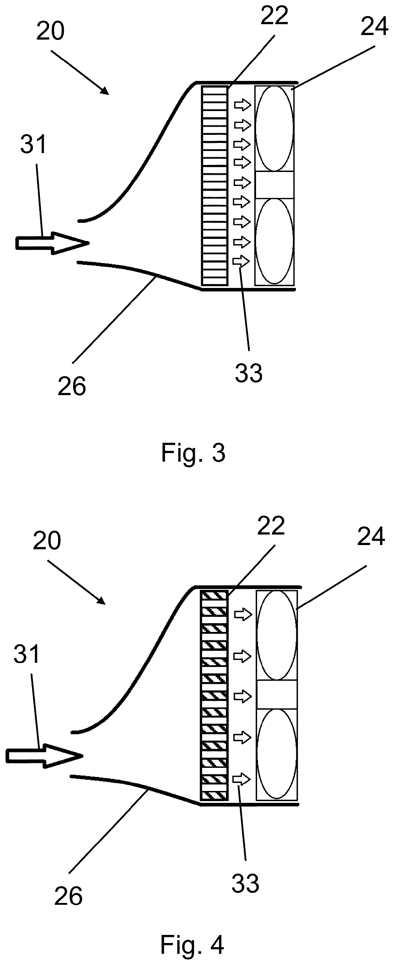

Figure 3 shows a schematic illustration of an example of a heat pump system 20 of a vehicle 1, wherein the heat pump system 20 comprises a thermal unit 22, an air supply unit 24 and a sealing means 26. The thermal unit 22 may be configured as a radiator and the air supply unit 24 may be configured as a fan unit, for example.

The heat pump system 20 is configured to direct an input air flow 31 to the thermal unit 22 and a thermal unit output air flow 33 to the air supply unit 24. In this regard, the thermal unit output air flow 33 is based on the input air flow 31 and a condition of the thermal unit 22. For example, in a condition where the thermal unit 22 is blocked, e.g., due to icing of the thermal unit 22, or clogged, e.g., due to dirt or other particles, the thermal unit output air flow 33 may be decreased. In such a case, the efficiency of the heat pump system 20 may be decreased, in particular because the air supply unit 24 may be required to use more power.

To determine a blockage of the thermal unit 22, the above with respect to Fig. 1 described method 100 is being used. That is, the model data and the measured data are being compared to determine the condition data indicative of a possible blockage of the thermal unit 22. The measuring means of the air supply unit 24 may be, for example, a power consumption monitor of the air supply unit 24 and/or an RPM sensor of the air supply unit 24 when it is designed as a fan unit.

The model data, on the other hand, may comprise values or data for the measured data, in particular of a power consumption and/or RPM of the fan unit, based on a condition of the thermal unit 22, in which the thermal unit 22 is not blocked by ice or clogged. Accordingly, the model may provide power consumption and/or RPM values, for example, based on previous measurements, in a condition where the thermal unit is not blocked by ice or clogged. In particular, the model data, e.g., the power consumption and/or RPM values, may be based on a current driving speed of the vehicle 1 and/or ambient conditions. Thus, the method 100 may, based on comparing the model data with the measured data, and for a current driving speed and/or ambient conditions, provide the condition data. Based on a deviation of values between the model data and the measured data, further, a degree of blockage of the thermal unit 22 may be determined.

To summarize, a measured RPM value and/or power consumption value of the air supply unit 24 may be compared to the model data for the applicable vehicle speed and ambient conditions with a non-blocked or non-iced thermal unit 22. Any difference of the measured data to the model data may correlate to the degree of blockage of the thermal unit 22 impacting the input air flow 31.

Advantageously, the measured RPM value in the measured data is based on a freewheeling mode of the air supply unit 24, in which no power is delivered to the air supply unit 24. Thereby, a comparison between the model data and the measured data may be made even easier and more accurate without having to account for any RPM value caused by the power supply to the air supply unit 24 because the RPM value is only caused by the thermal unit output air flow 33 in this case.

The sealing means 26 is configured to direct the input air flow 31 to the thermal unit 22 and the thermal unit output air flow 33 to the air supply unit 24.

Furthermore, the heat pump system 20 may also comprise an air guiding channel for guiding the input air flow 31 to the thermal unit 22 and the output air flow 33 of the thermal unit to the air supply unit 24, wherein by means of the sealing means 26 an leakage of an air of the input air flow 31 and/or an escape of an air of the output air flow 33 is reduced and/or prevented.

Figure 4 shows a schematic illustration of an example of a heat pump system 20 of a vehicle with a partly blocked thermal unit 22, wherein the heat pump system 20 comprises the thermal unit 22 which is partly blocked, an air supply unit 24 and a sealing means 26.

The heat pump system 20 is configured to direct an input air flow 31 to the thermal unit 22 and a thermal unit output air flow 33 to the air supply unit 24. In this regard, the thermal unit output air flow 33 is based on the input air flow 31 and on the thermal unit 22 which is partly blocked.

Further, the sealing means 26 is configured to direct the input air flow 31 to the thermal unit 22 and the thermal unit output air flow 33 to the air supply unit 24.

Furthermore, the heat pump system 20 may also comprise an air guiding channel for guiding the input air flow 31 to the thermal unit 22 and the output air flow 33 of the thermal unit to the air supply unit 24, wherein by means of the sealing means 26, a leakage of an air of the input air flow 31 and/or an escape of an air of the output air flow 33 is reduced and/or prevented.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples may be understood and effected by those skilled in the art in practicing the claimed subject matter, from the study of the figures, the disclosure, and the appended claims. In particular, respective parts/functions of the respective example described above may also be combined with each other. In particular, the present disclosure is not limited to specific modules, vehicle functions, user interfaces, user interface areas/fields and/or communication methods. In the claims, the word "comprising" does not exclude other elements or steps and the indefinite article "a" or "an" does not exclude a plurality. The mere fact that certain measures are recited in mutually different dependent claims does not indicate that a combination of these measures may not be used to advantage. Any reference signs in the claims should not be construed as limiting the scope of the claims.

### LIST OF REFERENCE SIGNS

- 1: vehicle
- 10: data processing system
- 12: computer-readable medium
- 20: heat pump system
- 22: thermal unit
- 24: air supply unit
- 26: sealing means
- 31: input air flow
- 33: thermal unit output air flow
- 100: method
- 110: receiving model data
- 120: receiving measured data
- 130: determining condition data

## Claims

1. A method (100) for determining condition data indicative of a blockage of a thermal unit (22) of a heat pump system (20) of a vehicle (1), the heat pump system (20) further comprising an air supply unit (24), the method (100) comprising:
- receiving model data (110) indicative of an air flow through the thermal unit (22) and the air supply unit (24), wherein the model data is based on a model of the heat pump system (20);
- receiving measured data (120) indicative of the air flow through the thermal unit (22) and the air supply unit (24), wherein the measured data is based on one or more measuring means of the air supply unit (24); and
- determining the condition data (130) based at least on the model data and the measured data.

2. The method (100) according to claim 1, wherein a measurement of the one or more measuring means is performed in a propelled mode of a fan unit as air supply unit (24) of the heat pump system (20).

3. The method (100) according to claim 2, wherein the measured data comprises at least information of a rotational speed of the fan unit, wherein the information consists of one or more of a first partial rotational speed value and a second partial rotational speed value.

4. The method (100) according to any one of the preceding claims, wherein a measurement by the one or more measuring means is performed in a freewheeling mode of a fan unit as air supply unit (24) of the heat pump system (20).

5. The method (100) according to any one of the preceding claims, wherein the method (100) is carried out during a driving state, in particular a driving state with a predefined driving speed range, of the vehicle (1).

6. The method (100) according any one of the preceding claims, wherein the condition data comprises one or more of icing information of a blockage of the thermal unit (22) and clogging information of a blockage of the thermal unit (22).

7. The method (100) to any one of the preceding claims, wherein the method (100) further comprises providing control data based on at least the condition data for controlling an air regulation means of the heat pump system (20) to unblock the thermal unit (22).

8. The method (100) according to claim 7, wherein the control data is further configured to control one or more of a de-icing of the heat pump system (20) and to re-perform the method (100) following a de-icing of the heat pump system (20).

9. The method (100) according to any one of the preceding claims, wherein the model data comprises at least one target value for the measured data and the determining of the condition data is at least based on a comparison of the measured data with the model data.

10. The method (100) according to any one of the preceding claims, wherein the model of the heat pump system (20) is at least modeled based on input data of a machine learning algorithm.

11. The method (100) according to claim 10, wherein the machine learning algorithm is trained at least by one or more of the measured fan data, the condition data, reference data of the vehicle (1) and usage data of the vehicle (1).

12. A method for determining a blockage of a thermal unit (22) of a heat pump system (20) of a vehicle (1), the heat pump system (20) further comprising an air supply unit (24), using condition data determined by the method (100) according to any of the preceding claims.

13. A data processing system (10) comprising means for carrying out the method (100) according to any one of the preceding claims.

14. A vehicle (1) with a data processing system (10) according to claim 13 and a heat pump system comprising an air supply unit (24) and a thermal unit (22).

15. The vehicle (1) of claim 14, wherein the heat pump system (20) comprises sealing means (26) configured to provide a sealed connection between the thermal unit (22) and the air supply unit (24).

## Amended claims

### Amended claims in accordance with Rule 137(2) EPC.

1. A method (100) for determining condition data indicative of a blockage of a thermal unit (22) of a heat pump system (20) of a vehicle (1), the heat pump system (20) further comprising an air supply unit (24), the method (100) comprising:
- receiving model data (110) indicative of an air flow through the thermal unit (22) and the air supply unit (24), wherein the model data is based on a model of the heat pump system (20);
- receiving measured data (120) indicative of the air flow through the thermal unit (22) and the air supply unit (24), wherein the measured data is based on one or more measuring means of the air supply unit (24); and
- determining the condition data (130) based at least on the model data and the measured data,
**characterized in that** a measurement by the one or more measuring means is performed in a freewheeling mode of a fan unit as air supply unit (24) of the heat pump system (20).

2. The method (100) according to claim 1, wherein a measurement of the one or more measuring means is performed in a propelled mode of a fan unit as air supply unit (24) of the heat pump system (20).

3. The method (100) according to claim 2, wherein the measured data comprises at least information of a rotational speed of the fan unit, wherein the information consists of one or more of a first partial rotational speed value and a second partial rotational speed value.

4. The method (100) according to any one of the preceding claims, wherein the method (100) is carried out during a driving state, in particular a driving state with a predefined driving speed range, of the vehicle (1).

5. The method (100) according any one of the preceding claims, wherein the condition data comprises one or more of icing information of a blockage of the thermal unit (22) and clogging information of a blockage of the thermal unit (22).

6. The method (100) to any one of the preceding claims, wherein the method (100) further comprises providing control data based on at least the condition data for controlling an air regulation means of the heat pump system (20) to unblock the thermal unit (22).

7. The method (100) according to claim 6, wherein the control data is further configured to control one or more of a de-icing of the heat pump system (20) and to re-perform the method (100) following a de-icing of the heat pump system (20).

8. The method (100) according to any one of the preceding claims, wherein the model data comprises at least one target value for the measured data and the determining of the condition data is at least based on a comparison of the measured data with the model data.

9. The method (100) according to any one of the preceding claims, wherein the model of the heat pump system (20) is at least modeled based on input data of a machine learning algorithm.

10. The method (100) according to claim 9, wherein the machine learning algorithm is trained at least by one or more of the measured fan data, the condition data, reference data of the vehicle (1) and usage data of the vehicle (1).

11. A method for determining a blockage of a thermal unit (22) of a heat pump system (20) of a vehicle (1), the heat pump system (20) further comprising an air supply unit (24), using condition data determined by the method (100) according to any of the preceding claims.

12. A data processing system (10) comprising means for carrying out the method (100) according to any one of the preceding claims.

13. A vehicle (1) with a data processing system (10) according to claim 12 and a heat pump system comprising an air supply unit (24) and a thermal unit (22).

14. The vehicle (1) of claim 13, wherein the heat pump system (20) comprises sealing means (26) configured to provide a sealed connection between the thermal unit (22) and the air supply unit (24).
